# EUROPÄISCHE PATENTSCHRIFT

(11) **EP 3 168 497 B1**
(45) Veröffentlichungstag und Bekanntmachung des Hinweises auf die Patenterteilung: **08.01.2020**
(21) Anmeldenummer: 16198498.4
(22) Anmeldetag: 11.11.2016
(51) Int. Cl.: F16H 25/06, F16H 49/00

(54) **GETRIEBE UND VERWENDUNG EINES GETRIEBES**
GEARBOX AND THE USE OF A GEARBOX
ENGRENAGE ET UTILISATION D'UNE ENGRENAGE

(30) Priorität: 12.11.2015 DE 102015119584
(43) Veröffentlichungstag der Anmeldung: 17.05.2017
(73) Patentinhaber: WITTENSTEIN SE, 97999 Igersheim (DE)
(72) Erfinder: Schreiber, Heiko, 02692 Doberschau (DE); Schmidt, Michael, 97234 Reichenberg (DE)
(74) Vertreter: Zimmermann & Partner Patentanwälte mbB

(56) Entgegenhaltungen:
- EP-A1- 0 201 730
- DE-A1-102007 011 175
- DE-A1-102007 019 607
- DE-A1-102011 051 514
- DE-A1-102012 102 802
- DE-A1-102012 104 083
- GB-A- 400 282

## Beschreibung

### Gebiet der Erfindung

Die Erfindung betrifft ein Getriebe und ein Verfahren zum Herstellen eines Getriebes.

### Stand der Technik

Aus dem Stand der Technik sind Getriebe bekannt, welche Zähne umfassen, die in einem Zahnträger radial verschieblich gelagert sind. Zum Antrieb der Zähne werden Antriebselemente mit einer Profilierung, wie beispielsweise Kurvenscheiben, verwendet. Die Zähne greifen in eine Verzahnung ein, sodass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2007 011 175 A1 veröffentlicht.

Ein für die Lebensdauer solcher Getriebe unter Umständen relevanter Punkt ist die Lagerung der sogenannten Schwenksegmente auf der Oberfläche der Kurvenscheibe. Bisherige Lösungen sehen hier einfache Wälzlager vor, beispielsweise mit einer Reihe Rollen, welche zwischen den Schwenksegmenten und der Kurvenscheibe angeordnet sind. Trotz der geringen Reibung der Wälzlagerung kann es jedoch in diesem Bereich je nach Belastungen oder Alter des Getriebes zu Ermüdungserscheinungen kommen.

Aus der gattungsgemäßen DE 10 2012 102 802 A1 ist ein Getriebe der zuvor beschriebenen Art bekannt, bei welchem parallel nebeneinander zwei Laufflächen für jeweils eine Gruppe auf einer Lauffläche umlaufender Nadelrollen vorgesehen sind, wobei auf jeder der beiden Gruppen von Nadelrollen jeweils eine Gruppe von Schwenksegmenten umläuft.

### Offenbarung der Erfindung

Aufgabe der Erfindung ist es, verbesserte Getriebe anzugeben, insbesondere solche, die eine gegenüber dem Stand der Technik verbesserte Lagerung der Schwenksegmente auf der Kurvenscheibe aufweisen.

Die Aufgabe wird mit einem Getriebe nach dem Anspruch 1 und einem Verfahren zum Verwenden eines Getriebes nach dem nebengeordneten Anspruch gelöst. Vorteilhafte Weiterbildungen und Ausführungsformen ergeben sich aus den Unteransprüchen und aus dieser Beschreibung.

Ausführungsformen der Erfindung betreffen insbesondere Koaxialgetriebe. Üblicherweise umfassen Getriebe der Erfindung eine innenliegende Kurvenscheibe als Antriebselement und ein Hohlrad mit einer innenliegenden Verzahnung oder ein außenliegendes Antriebselement mit innerer Profilierung und ein innenliegendes Zahnrad oder eine innenliegende Zahnstange, welche für den Fall des außenliegenden Antriebselementes die Verzahnung stellt. Konfigurationen von Ausführungsformen betreffen Lineargetriebe zur Umsetzung einer Rotation in eine Linearbewegung. Der Ausdruck "Kurvenscheibe" ist typischerweise allgemein dahingehend zu verstehen, dass das entsprechende Bauteil nicht zwingend einer Scheibe ähneln muss. Vielmehr kann die Kurvenscheibe auch Teil einer Antriebswelle sein oder eine längliche Ausdehnung, insbesondere mit mehreren Abschnitten, aufweisen. Einer oder mehrere solcher Abschnitte können einen sich veränderlichen Radius aufweisen, so dass die Funktion einer Kurvenscheibe erfüllt ist. Weitere Abschnitte können andere Funktionen aufweisen und beispielsweise zylinderförmig sein oder auch mit Kanten, z.B. zur Drehmomentübertragung, versehen sein. Typischerweise bezieht sich der Ausdruck Kurvenscheibe primär auf die Funktion dieses Bauteils, nämlich eine umlaufende Profilierung bereitzustellen, um beispielsweise je nach Winkellage der Antriebswelle und damit der Kurvenscheibe die Zähne in radialer Richtung anzutreiben oder ein Zurückgleiten der Zähne in den Führungen zuzulassen.

Die Verzahnung ist typischerweise eine umlaufende Verzahnung. In die Verzahnung greifen die Zähne oder die Zahnköpfe der Zähne ein, wobei die Zähne typischerweise linear radial verschieblich relativ zu dem Zahnträger gelagert sind. Dabei bedeutet "linear radial" üblicherweise, dass eine Führung in radialer Richtung vorliegt, welche lediglich eine Bewegung des Zahnes in radialer Richtung zulässt. Typischerweise lässt sich durch die Führung ein Zahn in genau einer Richtung linear verschieben, dies kann beispielsweise dadurch erreicht werden, dass der Zahn über eine bestimmte Streckenlänge einen gleichbleibenden Querschnitt in Verschieberichtung aufweist, wobei der Zahnträger ebenfalls eine Öffnung für den Zahn mit gleichbleibendem Querschnitt aufweist. Üblicherweise sind die Zähne in dem Zahnträger jeweils in genau einer Richtung verschieblich gelagert, typischerweise in Richtung der Längsachse des Zahnes. Weiterhin ist bei typischen Ausführungsformen der Rotationsfreiheitsgrad der Zähne relativ zu dem Zahnträger um die Längsachse des Getriebes gesperrt. Dies kann beispielweise mit einer linearen Führung der Zähne in radialer Richtung in dem Zahnträger erreicht werden. Auf diese Weise drehen sich die Zähne mit dem Zahnträger um die Längsachse des Getriebes, allerdings nicht relativ zu dem Zahnträger.

Bei typischen Ausführungsformen der erfindungsgemäßen Getriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Getrieben, bei welchen auch zumindest einer der folgenden Teile ebenfalls aus Kunststoff hergestellt ist: Verzahnung an einem Hohlrad oder einem Zahnrad, Zahnträger und Antriebselement. Bei typischen Ausführungsformen der Erfindung sind der Zahnträger und die Zähne aus einer Metalllegierung oder zusätzlich noch die Verzahnung oder weiter zusätzlich das Antriebselement aus einer Metalllegierung hergestellt. Solche Getriebe bieten den Vorteil, dass sie äußerst verdrehsteif und hoch belastbar sind. Getriebe, die zumindest teilweise aus Kunststoff bestehen oder Komponenten aus Kunststoff umfassen, bieten den Vorteil, dass sie ein geringes Gewicht aufweisen können. Mit dem Ausdruck "biegesteif" ist insbesondere eine Biegesteifigkeit um eine Querachse des Zahnsegments gemeint. Dies bedeutet insbesondere, dass bei einer Ansicht des Zahnes als Balken von einem Zahnfuß zu einem Zahnkopf eine Biegesteifigkeit vorliegt, welche Biegeverformungen zwischen Zahnkopf und Zahnfuß zumindest im Wesentlichen ausschließt. Durch die Biegesteifigkeit wird eine extrem hohe Belastbarkeit und Verdrehsteifigkeit des Getriebes erreicht.

Bei typischen Ausführungsformen ist zwischen dem Zahn und der Kurvenscheibe ein Schwenksegment angeordnet, welches auf einer Wälzlagerung gelagert ist, welche wiederum auf der Kurvenscheibe aufliegt. Vorteilhafte Ausführungsformen umfassen ein Schwenksegment, welches zwischen der Kurvenscheibe und jeweils mindestens einem Zahn angeordnet ist. Das Schwenksegment ermöglicht eine Verkippung des Zahnes relativ zu der Oberfläche der Kurvenscheibe oder relativ zu dem Schwenksegment. Typischerweise sind auf einem Schwenksegment mindestens zwei Zähne gelagert. Bei weiteren Ausführungsformen ist auf jeweils einem der Schwenksegmente genau ein Zahn gelagert, beispielsweise ein Rundzahn oder ein Flachzahn. Flachzähne können gegen Verdrehung um ihre eigene Achse in der Lagerung gesichert werden. Mehrere auf einem Schwenksegment gelagerte Zähne sind typischerweise in einer Reihe in axialer Richtung nebeneinander angeordnet. Mit solchen Anordnungen von mehreren Zähnen oder mit Flachzähnen kann die Laufruhe der Schwenksegmente erhöht werden.

Typischerweise sind die Zähne jeweils lose mit den jeweiligen Schwenksegmenten verbunden. Bevorzugte Schwenksegmente umfassen ein Profil oder eine Zahnlagerfläche, welche ein Abrutschen des Zahnes von dem Schwenksegment oder ein Verrutschen des Schwenksegments zumindest in einer Richtung verhindert. Es sollte berücksichtigt werden, dass die Schwenksegmente auf diese Weise durch die geführten Zähne in ihrer Lage in Umlaufrichtung relativ zu dem Zahnträger gehalten werden. Ein solches Profil kann beispielsweise ein Wulst sein, welcher in eine Vertiefung eingreift. Das Schwenksegment kann einen Wulst oder eine Vertiefung aufweisen. Bei weiteren Ausführungsformen können die Zähne an den Schwenksegmenten befestigt sein, beispielsweise mit Gelenken oder durch Hinterschneidungen.

Die Schwenksegmente weisen vorzugsweise einander zugewandte Kanten mit Erhebungen und Vertiefungen auf, beispielsweise eine Wellenform oder eine gezackte Form. Dies bietet den Vorteil, dass Nadelrollen, welche unterhalb der Schwenksegmente angeordnet sind, auch bei einem größeren Abstand zwischen den Schwenksegmenten zuverlässig in dem Raum zwischen den Schwenksegmenten und dem Antriebselement gehalten werden.

Typische Ausführungsformen der Erfindung umfassen eine Kurvenscheibe als Antriebselement. Die Kurvenscheibe weist vorzugsweise eine nicht-kreisförmige oder eine nicht-ellipsoide Bogenform oder Kurve auf. Die nicht-kreisförmige oder nicht-ellipsoide Bogenform bietet den Vorteil, dass verschiedene Kurven verwendet werden können, um beispielsweise unterschiedliche Übersetzungsverhältnisse einzustellen. Im Sinne dieser Anmeldung fallen Exzenter typischerweise unter kreisförmige oder ellipsoide Formen, da bei Exzentern lediglich die Drehachse nicht der Mittelachse der Kreisform entspricht, gleichwohl jedoch eine Kreisform vorhanden ist. Typische Kurvenscheiben umfassen zumindest oder genau zwei Erhebungen, welche typischerweise gleichverteilt über den Umfang angeordnet sind. Die Erhebungen können auch als Maxima bezeichnet werden. Mehrere Erhebungen bringen mehr Zähne in Eingriff mit der Verzahnung oder Innenverzahnung.

Bei typischen Ausführungsformen sind der Zahnträger oder die Verzahnung kreisförmig ausgebildet. Dies bietet den Vorteil einer einfachen Geometrie für den Zahnträger und die Verzahnung. Typischerweise erfolgt die Kraftübertragung auf der langsamen Seite des Getriebes zwischen der Verzahnung und dem Zahnträger. Dies bietet den Vorteil, dass der Weg für die Kraftübertragung äußerst kurz ist, sodass eine äußerst hohe Steifigkeit erreicht werden kann. Ausführungsformen, welche diese Bedingungen erfüllen, sind in einer nicht abschließenden Ausführung: Getriebe mit innenliegender Kurvenscheibe als Antrieb und außenliegendem Hohlrad mit Verzahnung, wobei der Zahnträger zwischen Hohlrad und Kurvenscheibe angeordnet ist; außenliegende Kurvenscheibe mit innenliegender Profilierung an einem Hohlrad zum Antrieb der radial beweglichen Zähne nach innen gegen eine Verzahnung, welche auf einem Zahnrad oder einer Zahnstange angeordnet ist.

Die Verzahnung und die Zähne weisen typischerweise gekrümmte Flanken auf. Beispiele für Krümmungen der Flanken sind eine zylinderförmige Krümmung oder eine Krümmung in Form einer logarithmischen Spirale. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine extreme Steifigkeit bei der Kraftübertragung zwischen der Verzahnung und den Zähnen erreicht.

Typische Ausführungsformen umfassen zwischen der Profilierung und den Zähnen eine Lagerung mit Schwenksegmenten und Wälzkörpern. Typischerweise sind mindestens zwei nebeneinanderliegende, insbesondere axial parallel oder versetzt liegende Zähne pro Schwenksegment vorgesehen. Auf diese Weise kann das Schwenksegment in seiner Laufbahn bzw. auf seiner jeweiligen Lauffläche stabilisiert werden. Drehungen des Schwenksegments um eine radiale Achse können vermieden werden. Typischerweise sind Wälzkörper von Ausführungsformen als Zylinderrollen, Kegelrollen oder Nadelrollen ausgebildet.

Typische Ausführungsformen umfassen ein oder mindestens zwei, typischerweise axial nebeneinander und/oder parallel laufend angeordnete Wälzkörperreihen pro umlaufender Reihe Schwenksegmente. Ein Schwenksegment kann auf mindestens zwei parallel umlaufenden Wälzkörperreihen gelagert sein. Dabei können bei zwei oder mehr parallel angeordneten Reihen von Zähnen jeweils eine Wälzkörperreihe unter einer Zahnreihe angeordnet sein, so dass das Schwenksegment unter jeweils einer Zahnreihe eine Unterstützung erfährt. Eine typische Anordnung ist beispielsweise eine Anordnung der Reihe von Zähnen radial über der Wälzkörperreihe mit dazwischenliegendem Schwenksegment. Die Mittelachse der jeweiligen Zähne liegt typischerweise in den mittleren 80% oder mittleren 50% oder mittleren 20% oder zumindest im Wesentlichen mittig über den jeweiligen Wälzkörpern. Auf diese Weise werden die Wälzkörper im Wesentlichen mittig belastet. Bei typischen Ausführungsformen ist eine der Wälzkörperreihen in einer Axialebene mit einer der Reihen von Zähnen angeordnet. Typischerweise ist jeweils eine Reihe in einer Axialebene, wobei gleiche Axialebene beispielsweise bedeutet, dass die Mitten zumindest im Wesentlichen zusammenfallen und/oder die Zähne vollständig innerhalb des axial ausgedehnten Bereichs der jeweiligen Wälzkörperreihe angeordnet sind.

So weit nicht anders angegeben, bezieht sich der Begriff "Axialebene" auf eine Ebene, welche senkrecht zu der axialen Richtung ist, typischerweise senkrecht zu der axialen Richtung des Getriebes. Die Längsrichtung eines Zahnes ist typischerweise zumindest im Wesentlichen senkrecht zu der axialen Richtung des Getriebes.

Typischerweise umfasst die Profilierung zumindest zwei parallele Laufflächen. In bzw. auf jeweils einer der parallelen Laufflächen ist bei typischen Ausführungsformen jeweils eine der Wälzkörperreihen angeordnet. Auf diese Weise haben parallel laufende Wälzkörper eigene Laufflächen bzw. jede Wälzkörperreihe kann in einer definierten, eigenen Lauffläche geführt werden.

Typischerweise ist die Profilierung durch zumindest ein umlaufendes Mittelbord geteilt. Auf diese Weise können bei Ausführungsformen parallele Laufflächen geschaffen werden, typischerweise beidseits des Mittelbords. Es ist möglich, mehrere parallele Mittelborde vorzusehen, um mehr als zwei parallele Laufflächen zu schaffen, bei typischen Ausführungsformen mit zwei Reihen von Zähnen oder mehr als zwei Reihen von Zähnen.

Typischerweise umfasst die Kurvenscheibe zwei umlaufende Randborde. Die Randborde begrenzen typischerweise jeweils eine außen liegende Lauffläche nach axial außen. Mittig werden die Laufflächen typischerweise durch ein Mittelbord begrenzt. Bei typischen Ausführungsformen begrenzen die Randborde mit genau einem Mittelbord zwei Laufflächen, bei weiteren Ausführungsformen sind mehrere Mittelborde und damit auch mehr als zwei Laufflächen und ggf. auch mehr als zwei Wälzkörperreihen vorgesehen.

Das Mittelbord und/oder oder die Randborde können jeweils eine Höhe aufweisen, welche zumindest im Wesentlichen dem Durchmesser der Wälzkörper entspricht. Sie können bei weiteren Ausführungsformen eine geringfügig geringere, bspw. zwischen 0% und 10% oder zwischen 0% und 5% geringere, Höhe aufweisen als der Durchmesser. Bei weiteren Ausführungsformen liegt die Höhe des Mittelbords und/oder der Randborde bei lediglich zwischen 50% und 80% oder zwischen 50% und 95% des Durchmessers der Wälzkörper. Mittelbord und Randborde können unterschiedliche Höhen aufweisen, beispielsweise kann das Mittelbord niedriger sein als die Randborde. Randborde werden bei Ausführungsformen auch als Stabilisierungsfläche für die Schwenksegmente verwendet. Bei weiteren Ausführungsformen ist das Mittelbord höher als die Randborde, bspw. falls das Mittelbord zur Stabilisierung der Laufruhe der Schwenksegmente verwendet wird.

Typischerweise liegen die Schwenksegmente jeweils mit einer Wälzlagerfläche einerseits auf zumindest einem Teil der Wälzkörper auf und weisen auf einer der Wälzlagerfläche gegenüberliegenden Seite jeweils eine Zahnlagerfläche auf, wobei typischerweise auf einer Zahnlagerfläche zumindest zwei Zähne gelenkig gelagert sind. Bei typischen Ausführungsformen ist die Zahnlagerfläche derart ausgebildet, so dass durch die Zahnlagerfläche eine gemeinsame Drehachse für die mindestens zwei Zähne gebildet wird. Typische Zahnlagerflächen von Ausführungsformen umfassen jeweils einen runden Flächenabschnitt für jeweils zumindest einen Zahn und/oder mehrere axial parallel angeordnete Zähne, wobei der Mittelpunkt des Radius des runden Flächenabschnitts zumindest im Wesentlichen mit der Wälzlagerfläche zusammenfällt. Typischerweise fällt eine Drehachse des durch die Zahnlagerfläche gebildeten Zahnlagers zumindest im Wesentlichen mit der Wälzlagerfläche zusammenfällt. Die Zahnlagerfläche kann im Bereich des Zahnlagers als Wulst und/oder als Kreisabschnitt ausgebildet sein.

Typische Getriebe von Ausführungsformen umfassen parallel umlaufende Reihen von Zähnen. Typisch sind mindestens oder genau zwei Reihen Zähne. Typischerweise laufen die Zähne in parallel umlaufenden Reihen von Führungen des Zahnträgers.

Bei typischen Ausführungsformen sind jeweils zumindest zwei parallele Zähne auf einem Schwenksegment angeordnet. Typischerweise gehören die zwei parallelen Zähne zu den zwei parallelen Reihen von Zähnen, welche beispielsweis in Führungen in dem Zahnträger geführt sind. Bei Ausführungsformen sind zwei parallele Zähne von parallelen Reihen von Zähnen in Axialrichtung hintereinander auf einem Schwenksegment, typischerweise auf einem Wulst oder in einer Vertiefung des Schwenksegments, angeordnet.

Typische Zahnträger von Ausführungsformen umfassen zumindest einen sich radial nach innen oder radial nach außen erstreckenden Anlaufflansch, welcher die Schwenksegmente zumindest teilweise in axialer Richtung übergreift. Auf diese Weise besteht die Option, auf zusätzliche Anlaufscheiben zu verzichten. Der Anlaufflansch kann integral mit dem Zahnträger ausgeführt sein oder an dem Zahnträger befestigt sein. Typische Ausführungsformen weisen keine Anlaufscheibe auf. Einige Ausführungsformen umfassen eine Anlaufscheibe zumindest einseitig axial neben den Schwenksegmenten und/oder neben den Wälzkörpern zur Führung der Schwenksegmente.

Bei Ausführungsformen mit Anlaufflansch an dem Zahnträger umfasst typischerweise zumindest einer der Anlaufflansche eine Abtriebslagerfläche, welche unmittelbar mit Abtriebslagerwälzkörpern zusammenwirkt. Typischerweise ist ein Lager zwischen Zahnträger und der Kurvenscheibe oder einer mit der Kurvenscheibe verbundenen Welle integral ausgeführt. Solche Ausführungsformen können platzsparend sein. Typischerweise sind die Abtriebslagerwälzkörper unmittelbar auf der Kurvenscheibe gelagert. Bei weiteren Ausführungsformen ist zwischen Zahnträger und Kurvenscheibe ein Lager mit Lagerringen vorgesehen. Dies kann die Herstellung vereinfachen.

Typische Getriebe umfassen eine Mehrzahl von Schwenksegmenten, welche umlaufend auf Wälzkörpern angeordnet sind und jeweils mit einer Wälzlagerfläche auf den Wälzkörpern aufliegen. Die Wälzkörper sind typischerweise auf der Kurvenscheibe gelagert. Die Wälzkörper verringern den Reibungswiderstand.

Typischerweise ist an den Schwenksegmenten in axialer Richtung beidseitig und/oder randseitig des Schwenksegments jeweils eine Bordlagerfläche angeordnet. Bei weiteren Ausführungsformen sind an den Schwenksegmenten in axialer Richtung mittig Bordlagerflächen angeordnet, welche beispielsweise dazu vorgesehen sind auf einem Mittelbord aufzuliegen. Bei Ausführungsformen mit zwei beidseitigen und/oder randseitigen Bordlagerflächen können die Bordlagerflächen zumindest teilweise auf den Randborden der Kurvenscheibe aufliegen. Auf diese Weise kann ein Verkippen der Schwenksegmente verhindert werden und ein ruhiger Lauf sichergestellt werden.

### Kurze Beschreibung der Zeichnung

Nachfolgend wird die Erfindung anhand der beiliegenden Zeichnung näher erläutert, wobei die Figur zeigt:

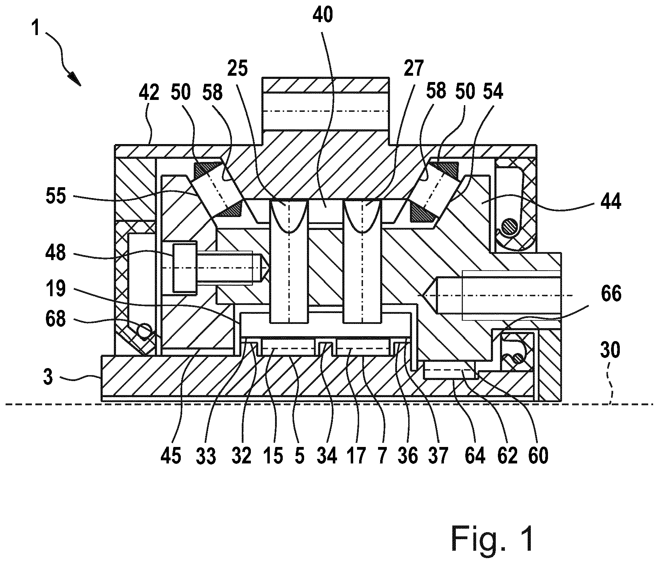

- Fig. 1: zeigt schematisch eine erste Ausführungsform der Erfindung in einem Ausschnitt eines Längsschnitts durch ein Getriebe.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

In der Fig. 1 ist eine typische Ausführungsform eines erfindungsgemäßen Getriebes 1 in einem Ausschnitt einer Schnittansicht gezeigt. Für weitere Erläuterungen zur Funktionsweise des Getriebes und für weitere technische Merkmale wird beispielsweise auf die DE 10 2007 011 175 A1 verwiesen.

Das Getriebe 1 umfasst eine Kurvenscheibe 3, welche integral mit einer Antriebswelle ausgeführt ist und dadurch eine, in axialer Richtung, längliche Gestalt aufweist. Die Kurvenscheibe 3 umfasst eine Profilierung, welche zwei Laufflächen 5 und 7 umfasst. Die Profilierung und damit auch die Laufflächen 5 und 7 weisen einen sich über den Umfang verändernden Radius auf, insbesondere weisen sie zwei Maxima, welche auch als Erhebungen bezeichnet werden können, und zwei Minima auf, wobei die beiden Laufflächen 5 und 7 die gleiche Winkellage der sich verändernden Radien aufweisen.

Bei alternativen Ausführungsformen können auch drei oder mehr Laufflächen für Wälzkörper vorgesehen sein.

Auf den Laufflächen 5 und 7 sind Wälzkörper 15 und 17 gelagert. Auf diesen Wälzkörpern 15 und 17 sind Schwenksegmente 19 gelagert, wobei in der Schnittansicht der Fig. 1 lediglich ein Schwenksegment 19 dargestellt ist. Das Schwenksegment 19 liegt somit auf zwei umlaufenden Wälzkörperreihen mit den Wälzkörpern15 und 17 auf.

Wie bei typischen Ausführungsformen liegt auch bei der Ausführungsform der Figur 1 eine umlaufende Reihe Schwenksegmente auf zwei parallel umlaufenden Wälzkörperreihen auf. Weitere Ausführungsformen können drei oder mehr parallel verlaufende Wälzkörperreihen umfassen, auf welchen eine Reihe Schwenksegmente gelagert ist. Bei weiteren Ausführungsformen mit mehreren Reihen Schwenksegmenten sind typischerweise je Reihe Schwenksegmente zwei Wälzkörperreihen vorgesehen.

Das Schwenksegment 19 umfasst einen Wulst auf der radialen äußeren Seite des Schwenksegments 19, welcher in Nuten von zwei Zähnen 25 und 27 eingreift. Der Wulst bildet eine Zahnlagerfläche, welche einen Radius aufweist, dessen Mittelpunkt mit der gegenüberliegenden Wälzlagerfläche des Schwenksegments 19 zusammenfällt. Die Zähne 25 und 27 weisen damit eine identische Drehachse bezüglich des gemeinsamen Schwenksegments auf.

Die Zähne 25 und 27 sind in ihrer axialen Lage bezüglich der Längsachse 30 des Getriebes 1 zumindest im Wesentlichen mittig über den Wälzkörpern 15 und 17 gelagert, wobei jeweils ein Zahn 25 bzw. 27 über einem Wälzkörper 15 bzw. 17 gelagert ist. Auf diese Weise wird eine durchgängige Kraftübertragung durch das Schwenksegment 19 erreicht. Außerdem werden die als Nadelrollen ausgeführten Wälzkörper 15 und 17 etwa mittig belastet. Weiterhin kann die Baulänge der Wälzkörper 15 und 17 selbst durch diese Maßnahme verringert werden, wobei sich die Laufstabilität erhöhen kann.

Die Kurvenscheibe 3 weist zur Begrenzung der Laufflächen 5 und 7 zwei Randborde 32 und 36 sowie ein Mittelbord 34 auf. Das Mittelbord 34 liegt mittig zwischen den Laufflächen 5 und 7 für die Wälzkörper 15 und 17. Die beiden Randborde 32 und 36 beschränken die Bewegungsfreiheit der Wälzkörper 15 und 17 jeweils in axialer Richtung nach außen. Auf diese Weise werden zwischen den Randborden 32 und 36 mit dem Mittelbord 34 die zwei Laufflächen 5 und 7 geschaffen.

Das Schwenksegment 19 weist Bordlagerflächen 33 und 37 auf, welche sich jeweils auf den Randborden 32 und 36 abstützen können. Auf diese Weise wird die Laufruhe des Schwenksegments 19 erhöht. Die Randborde 32 und 36 sowie das Mittelbord weisen zumindest im Wesentlichen eine Höhe auf, welche dem Durchmesser der Wälzkörper 15 und 17 entspricht.

Bei weiteren Ausführungsformen sind die Bordlagerflächen erhöht ausgeführt, so dass die Randborde und eventuell das Mittelbord niedriger als der Durchmesser der Wälzkörper ausgeführt sein können. Dennoch kann eine Stabilisierung durch die erhöhten Bordlagerflächen am Schwenksegment erreicht werden.

Die Zähne 25 und 27 greifen in eine gemeinsame Verzahnung 40 ein, welche integral mit einem Gehäuse 42 des Getriebes 1 ausgeführt ist. Die Zähne 25 und 27 sind in radial ausgerichteten Führungen in einem zweiten Zahnträgerteil 44 eines Zahnträgers aufgenommen. Der Zahnträger umfasst außerdem noch ein erstes Zahnträgerteil 45, welches mit dem zweiten Zahnträgerteil 44 durch ein als Schraube ausgeführtes Verbindungsmittel 48 verbunden ist. Über den Umfang des Zahnträgers sind eine Mehrzahl von Verbindungsmitteln 48 vorgesehen, bei der beispielhaften Ausführungsform der Fig. 1 insgesamt sechs Stück.

Bei weiteren Ausführungsformen kann auch eine abweichende Anzahl von Verbindungsmitteln vorgesehen werden, wobei auch eine ungerade Anzahl möglich ist. Die Verbindungsmittel können gleichmäßig über den Umfang des Zahnträgers verteilt werden, es ist hingegen auch möglich, unterschiedliche Winkelabstände vorzusehen, beispielsweise um ein Zusammenfügen der beiden Zahnträgerteile nur in einer bestimmten Winkellage zu ermöglichen. So sind bei der Ausführungsform der Fig. 1 beispielhaft die Winkel zwischen den Verbindungsmitteln nicht gleichmäßig, um einen Wiederzusammenbau der Zahnträgerteile des Zahnträgers nur in einer bestimmten relativen Winkelposition zu einander zuzulassen. Bei weiteren Ausführungsformen können Nuten, Stifte oder andere Konturen vorgesehen sein oder es können Markierungen vorgesehen sein, um eine Wiedermontage nur in einer bestimmten Winkellage zuzulassen oder zu ermöglichen. Auf diese Weise ist eine Bearbeitung des Zahnträgers in einer Aufspannung möglich, wobei anschließend die Zahnträgerteile wieder voneinander gelöst werden, um sie dann im Getriebe wieder mit einander zu verbinden.

Bei weiteren Ausführungsformen ist der Zahnträger einstückig ausgeführt und/oder wird mit Lagern mit Lagerschalen gelagert.

Zur Lagerung des Zahnträgers an dem Gehäuse 42 sind Zahnträger-Wälzkörper 50 vorgesehen, welche in einem Winkel von etwa 75 Grad zu der Längsachse 30 des Getriebes 1 montiert sind. Dabei sind die Winkellagen der Zahnträger-Wälzkörper 50 spiegelbildlich zu einer axialen Schnittebene des Getriebes 1 zueinander, um eine zuverlässige Lagerung des Zahnträgers in dem Gehäuse 42 zu erreichen.

Weitere Ausführungsformen weisen andere Winkellagen der Zahnträger-Wälzkörper auf, beispielsweise zwischen 0° und 80° relativ zu der Längsachse des Getriebes.

Die Zahnträger-Wälzkörper 50 sind jeweils unmittelbar auf Zahnträgerlagerflächen 54 und 55 des ersten Zahnträgerteils 44 und des zweiten Zahnträgerteils 45 gelagert. Gehäuse-seitig sind die Zahnträger-Wälzkörper 50 auf Gehäuselagerflächen 58 des Gehäuses 42 gelagert. Die Zahnträger-Wälzkörper 50 rollen also jeweils unmittelbar auf den Zahnträgerlagerflächen 54 und 55 sowie auf den Gehäuselagerflächen 58. Auf diese Weise wird eine kompakte integrale Lagerung erreicht, welche wenig Bauraum beansprucht.

Weiterhin ist bei dem Ausführungsbeispiel der Fig. 1 auch das Abtriebslager als integrales Lager ausgeführt, wobei der Zahnträger bzw. bei der Ausführungsform der Fig. 1 das zweite Zahnträgerteil 44 eine Abtriebslagerfläche 60 aufweist, auf welcher unmittelbar Abtriebslagerwälzkörper 62, welche als Rollen ausgeführt sind, abrollen. Auf der Kurvenscheibe ist eine weitere Abtriebslagerfläche 64 ausgebildet, welche ebenfalls unmittelbar mit den Abtriebslagerwälzkörpern 62 zusammenwirkt. Dadurch rollen die Abtriebslagerwälzkörper unmittelbar auf der Kurvenscheibe 3 ab. Auf diese Weise wird ein integriertes Lager für eine kompakte Bauform geschaffen.

Die Abtriebslagerfläche 60 des zweiten Zahnträgerteils 44 ist Teil eines Abtriebsseitigen Anlaufflansches 66, welcher ein Ausweichen der Schwenksegmente 19 in Abtriebs-seitiger Richtung verhindert. Durch die integrale Ausführung des Anlaufflansches 66 mit dem zweiten Zahnträgerteil 44 wird eine kompakte Bauform und eine hohe Steifigkeit erreicht.

Das erste Zahnträgerteil 45 weist einen weiteren Anlaufflansch 68 auf, welcher ein Ausweichen der Schwenksegmente 19 in die entgegengesetzte Richtung ebenfalls verhindert.

Typischerweise ist gegenüberliegend zu dem Abtrieb, also der Seite des Abtriebslagers gegenüberliegend, ein weiteres Lager für die integral mit einer Antriebswelle ausgebildete Kurvenscheibe 3 vorgesehen. Dies liegt jedoch außerhalb des dargestellten Bereichs der Fig. 1. Antriebs-seitig ist u.U. auch ein größerer Bauraum in radialer Richtung vorhanden, sodass das Antriebs-seitige Lager ggf. als Lager mit separaten Laufflächen ausgeführt sein kann. Bei weiteren Ausführungsformen kann auch das Antriebslager als integrales Lager ausgeführt sein.

## Patentansprüche

1. Getriebe (1), insbesondere Koaxialgetriebe oder Lineargetriebe, mit
- einer Verzahnung (40),
- einem Zahnträger mit radial ausgerichteten Führungen,
- Zähnen (25, 27), welche in den Führungen zum Eingriff mit der Verzahnung aufgenommen sind, wobei die Zähne (25, 27) in den Führungen in Richtung ihrer Längsachse relativ zu dem Zahnträger radial verschieblich gelagert sind,
- einer Kurvenscheibe (3) zum radialen Antrieb der Zähne (25, 27), wobei die Kurvenscheibe eine umlaufende Profilierung aufweist,
- Wälzkörpern (15, 17), welche als Nadelrollen oder als Zylinderrollen ausgebildet sind und auf der Profilierung angeordnet sind, und
- einer Mehrzahl von Schwenksegmenten (19) zur Lagerung der Zähne (25, 27), wobei die Schwenksegmente auf den Wälzkörpern (15, 17) angeordnet sind,
- wobei die Wälzkörper (15, 17) in zumindest zwei in Umlaufrichtung der Kurvenscheibe parallelen Wälzkörperreihen auf der Profilierung angeordnet sind,
- **dadurch gekennzeichnet, dass** die Schwenksegmente auf mindestens zwei parallel umlaufenden Wälzkörperreihen gelagert sind.

2. Getriebe (1) nach Anspruch 1, wobei die Profilierung zumindest zwei parallele Laufflächen (5, 7) aufweist.

3. Getriebe (1) nach einem der vorhergehenden Ansprüche, wobei die Profilierung durch zumindest ein umlaufendes Mittelbord (34) geteilt ist.

4. Getriebe (1) nach Anspruch 3, wobei die Kurvenscheibe (3) zwei umlaufende Randborde (32, 36) umfasst.

5. Getriebe (1) nach einem der vorhergehenden Ansprüche mit parallel umlaufenden Reihen von Zähnen (25, 27).

6. Getriebe (1) nach einem der vorhergehenden Ansprüche, wobei jeweils zumindest zwei parallele Zähne (25, 27) auf einem Schwenksegment (19) angeordnet sind.

7. Getriebe (1) nach einem der vorhergehenden Ansprüche, wobei die Schwenksegmente (19) jeweils mit einer Wälzlagerfläche einerseits auf zumindest einem Teil der Wälzkörper (15, 17) aufliegen und auf einer der Wälzlagerfläche gegenüberliegenden Seite jeweils eine Zahnlagerfläche aufweisen, wobei auf einer Zahnlagerfläche zumindest zwei Zähne (25, 27) gelenkig gelagert sind.

8. Getriebe (1) nach Anspruch 7, wobei die Zahnlagerfläche derart ausgebildet ist, so dass durch die Zahnlagerfläche eine gemeinsame Drehachse für die mindestens zwei Zähne (25, 27) gebildet wird

9. Getriebe (1) nach einem der Ansprüche 5 bis 8, wobei eine der Wälzkörperreihen in einer Axialebene mit einer der Reihen von Zähnen (25, 27) angeordnet ist.

10. Verwendung eines Getriebes (1) nach einem der vorhergehenden Ansprüche.

## Claims

1. Gear mechanism (1), in particular coaxial gear mechanism or linear gear mechanism, having
- a toothing system (40),
- a tooth carrier with radially oriented guides,
- teeth (25, 27) which are received in the guides for engagement with the toothing system, the teeth (25, 27) being mounted in the guides such that they can be displaced radially relative to the tooth carrier in the direction of their longitudinal axis,
- a cam disk (3) for radially driving the teeth (25, 27), the cam disk having a circumferential profiling,
- rolling bodies (15, 17) which are configured as cylindrical rollers, or needle rollers and which are arranged on the profiling, and
- a plurality of pivoting segments (19) for mounting the teeth (25, 27), the pivoting segments being arranged on the rolling bodies (15, 17),
- the rolling bodies (15, 17) being arranged on the profiling in at least two rolling body rows which are parallel in the circulating direction of the cam disk,
- chrachterized in that the pivoting segments are supported on at least two rolling body rows which are parallel in the circulating direction.

2. Gear mechanism (1) according to Claim 1, the profiling having at least two parallel running faces (5, 7).

3. Gear mechanism (1) according to either of the preceding claims, the profiling being split by way of at least one circumferential central rim (34).

4. Gear mechanism (1) according to Claim 3, the cam disk (3) comprising two circumferential edge rims (32, 36).

5. Gear mechanism (1) according to one of the preceding claims having circumferentially parallel rows of teeth (25, 27).

6. Gear mechanism (1) according to one of the preceding claims, in each case at least two parallel teeth (25, 27) being arranged on one pivoting segment (19).

7. Gear mechanism (1) according to one of the preceding claims, the pivoting segments (19) lying in each case with an anti-friction bearing face on one side on at least part of the rolling bodies (15, 17), and having in each case one tooth bearing face on a side which lies opposite the anti-friction bearing face, at least two teeth (25, 27) being mounted in an articulated manner on one tooth bearing face.

8. Gear mechanism (1) according to Claim 7, the tooth bearing face being configured in such a way that a common rotational axis for the at least two teeth (25, 27) is formed by way of the tooth bearing face.

9. Gear mechanism (1) according to Claim 5, one of the rolling body rows being arranged in an axial plane with one of the rows of teeth (25, 27).

10. Use of a gear mechanism (1) according to one of the preceding claims.

## Revendications

1. Engrenage (1), en particulier engrenage coaxial ou linéaire, avec
- une denture (40),
- un porte-dents à guides orientés radialement,
- des dents (25, 27) qui sont reçues dans les guides de manière à venir en prise avec la denture, les dents (25, 27) étant montées de manière à pouvoir se déplacer radialement dans les guides dans la direction de leur axe longitudinal par rapport au porte-dents,
- une came (3) destinée à l'entraînement radial des dents (25, 27), la came présentant un profilage périphérique,
- des éléments roulants (15, 17) qui sont conçus en forme de rouleaux à aiguilles ou de rouleaux cylindriques et disposés sur le profilage, et
- une pluralité de segments pivotants (19) destinés au montage des dents (25, 27), les segments pivotants étant disposés sur les éléments roulants (15, 17),
- dans lequel les éléments roulants (15, 17) sont disposés sur le profilage en au moins deux rangées d'éléments roulants parallèles dans la direction de rotation des cames,
- **caractérisé par le fait que** les segments pivotants sont montés sur au moins deux rangées d'éléments roulants périphériques parallèles.

2. Engrenage (1) selon la revendication 1, dans lequel le profilage présente au moins deux surfaces de roulement parallèles (5, 7).

3. Engrenage (1) selon l'une des revendications précédentes, dans lequel le profilage est divisé par au moins un bord central périphérique (34).

4. Engrenage (1) selon la revendication 3, dans lequel la came (3) comprend deux bords périphériques (32, 36).

5. Engrenage (1) selon l'une des revendications précédentes avec des rangées de dents périphériques parallèles (25, 27).

6. Engrenage (1) selon l'une des revendications précédentes, dans lequel au moins deux dents parallèles (25, 27) sont disposées sur un segment pivotant (19).

7. Engrenage (1) selon l'une des revendications précédentes, dans lequel les segments pivotants (19) reposent, chacun, par une surface d'appui, d'une part, sur au moins une partie des éléments roulants (15, 17) et présentent, d'un côté opposé à la surface d'appui, chacun, une surface d'appui dentée, sur une surface d'appui dentée étant disposées articulées au moins deux dents (25, 27).

8. Engrenage (1) selon la revendication 7, dans lequel la surface d'appui dentée est conçue de sorte que par la surface d'appui dentée soit formé un axe de rotation commun pour les au moins deux dents (25, 27).

9. Engrenage (1) selon l'une des revendications 5 à 8, dans lequel l'une des rangées d'éléments roulants est disposée dans un plan axial avec l'une des rangées de dents (25, 27).

10. Utilisation d'un engrenage (1) selon l'une des revendications précédentes.
